# EUROPÄISCHE PATENTANMELDUNG

(11) **EP 1 992 854 A2**
(43) Veröffentlichungstag der Anmeldung: **19.11.2008**
(21) Anmeldenummer: 08004753.3
(22) Anmeldetag: 14.03.2008
(51) Int. Cl.: F16K 31/06

(54) **Magnetantrieb ohne Remanenzscheibe**

(30) Priorität: 15.05.2007 DE 102007022712
(71) Anmelder: Karl Dungs GmbH & Co.KG, 73660 Urbach (DE)
(72) Erfinder: Wörner, Jürgen, 73547 Lorch/Weitmars (DE)
(74) Vertreter: Rüger, Barthelt & Abel Patentanwälte

(57) **Zusammenfassung**

Durch Anbringung einer oder mehrerer Ausnehmungen, Einstiche oder dergleichen auf der Anlagefläche des Ankers oder der Polfläche eines Polstücks kann die Haltekraft des Magnetantriebs so weit verringert werden, dass trotz fehlender Remanenzscheibe ein Schließen innerhalb einer Sekunde sicher gestellt wird. Der Verzicht auf die Remanenzscheibe führt zu einer Erhöhung der Betriebssicherheit und einer Verminderung der Teilezahl. Der Magnetantrieb (5) kann mit Powerschaltungen betrieben werden, die die Spule (10) anfänglich mit einem besonders hohen Strom beaufschlagen, der zu einer Übererregung führt. Der Magnetantrieb (5) eignet sich auch für die Ansteuerung ohne Übererregung.

## Beschreibung

Die Erfindung betrifft einen Ventilantrieb mit einem Elektromagneten, der einen beweglichen Anker aufweist.

In der Praxis werden Ventile, insbesondere Gasventile, häufig von Elektromagneten angetrieben. Beispielsweise offenbart dazu die DE 102 48 616 A1 eine Ventilanordnung, bestehend aus zwei Ventilen. Eines der beiden Ventile ist durch einen Magnetantrieb betätigt. Dieser umfasst eine Magnetspule mit zugehörigem Magnetkreis und einen linear beweglich gelagerten Anker, der zur Öffnung des Ventils von einem Polstück des Magnetkreises angezogen wird, wenn die Spule erregt wird. Zwischen dem Polstück und dem Anker ist eine endseitig geschlossene Edelstahlhülse vorgesehen, um Gasdichtigkeit herzustellen. An seinem stirnseitigen Ende ist der Anker mit einer kegelförmigen flachen Ausnehmung versehen.

Durch die auch als Becher bezeichnete Edelstahlhülse wird eine direkte Anlage der Stirnfläche des Ankers an der entsprechenden Gegenfläche des Polstücks vermieden. Deshalb ist die Ausbildung von Remanenzerscheinungen auf ein geringes Maß gemindert. Der Anker löst sich bei Entregung der Magnetspule relativ schnell von dem Polstück. Die Schließfeder schließt das Ventil relativ zügig.

Einen anderen Aufbau offenbart die DE 195 25 384 A1. Wiederum betätigt ein Elektromagnet bestehend aus einer Magnetspule und einem Magnetkreis einen Anker, der mit seiner Stirnfläche gegen eine Polfläche des Magnetkreises läuft. Um ein Klebenbleiben des Ankers an der Polfläche zu vermeiden, ist an dem Anker eine Remanenzscheibe angeordnet. Diese besteht aus einem nicht magnetisierbaren Material und bewirkt, dass auch bei vollständig geöffnetem Ventil ein geringer Luftspalt zwischen der Polfläche und der Stirnfläche des Ankers bestehen bleibt. Dies verhindert ein Hängenbleiben des Ankers in Offenstellung und ermöglicht ein schnelles Schließen des Ventils nach Abschaltung der Spule.

Es muss sicher gestellt werden, dass das Ventil nach Abschalten des Spulenstroms in einer Zeit kürzer als eine Sekunde schließt. Angestrebt werden Schließzeiten von etwa 0,3 Sekunden. Diese kurzen Schließzeiten müssen auch nach sehr vielen Betätigungsvorgängen, beispielsweise eine Million, eingehalten werden. Normalerweise wird dies durch die Remanenzscheibe an dem Anker sichergestellt. Jedoch kann die Remanenzscheibe selbst zur Fehlerquelle werden, wenn sie sich von dem Anker löst.

Davon ausgehend ist es Aufgabe der Erfindung, einen Ventilantrieb anzugeben, der dauerhaft verlässlich arbeitet, dabei robust und einfach aufgebaut ist und kurze Schließzeiten garantiert.

Diese Aufgabe wird mit dem Ventilantrieb nach Anspruch 1 gelöst:

Der erfindungsgemäße Ventilantrieb weist in Übereinstimmung mit herkömmlichen Ventilantrieben einen Magnetkreis, eine Magnetspule und einen beweglich gelagerten Anker auf. Der Anker kann eine geschlossene oder ringförmige Ankerfläche aufweisen, die einer Gegenfläche des Magnetkreises gegenüber liegt und mit dieser einen Luftspalt einschließt. Erfindungsgemäß sind die Ankerfläche und die Gegenfläche so angeordnet und ausgebildet, dass sie miteinander in Anlage gelangen können. Eine Remanenzscheibe oder dergleichen Abstandshaltemittel sind zwischen der Ankerfläche und der Gegenfläche nicht vorgesehen. Die Ankerfläche und/oder die Gegenfläche sind mit zumindest einer außermittigen Ausnehmung vorgesehen, die den Magnetfluss in der Umgebung dieser Ausnehmung auf einen geringen Querschnitt konzentriert, wodurch das die Ausnehmung umgebende Material Sättigungserscheinungen und damit eine abnehmende Permeabilität zeigt. Dadurch ersetzt das z.B. ferromagnetische Material des Ankers oder des Polstücks in den Bereichen der Ankerfläche bzw. der Gegenfläche, die durch die erhöhte Flussdichte in die Nähe der Sättigung oder in die Sättigung gebracht werden, die früher vorhandene Remanenzscheibe.

Obwohl an der Ankerfläche und/oder der Gegenfläche nun höhere magnetische Feldstärken erreicht werden, führt dies nicht zum Hängen oder Klebenbleiben des Ankers. Die sonst auftretende starke Beschleunigung des Ankers kurz vor Aufeinandertreffen der Ankerfläche und Gegenfläche unterbleibt nun. Dies vermeidet eine plastische Verformung des Ankers wie auch eine Ausrichtung der Elementarmagnete, wie sie sonst durch die mechanischen Erschütterungen auftreten und zu einer Magnetisierung des Ankers führen können.

Die Ausnehmung wird vorzugsweise in Form einer Nut, z.B. in Form einer Ringnut ausgebildet. Es können auch mehrere konzentrische Nuten vorgesehen sein. Vorzugsweise verläuft die Nut nahe an dem Außenumfang des Ankers und durchschneidet somit diejenigen Bereiche der Ankerfläche, in denen der Magnetfluss bevorzugt fließt. Die Flussverdrängung und Konzentration auf die verbleibenden Abschnitte bewirkt eine höhere magnetische Feldstärke in diesen Materialbereichen.

An Stelle der einen oder mehreren Ringnuten können auch Spiralnuten vorgesehen werden. Bevorzugt wird z.B. auch die Ausbildung der Nut als Radialnut. Es können sich mehrere Radialnuten in verschiedenen Richtungen über die Ankerfläche erstrecken. Beispielsweise können sich die Radialnuten sternförmig von einer zentralen Ausnehmung weg erstrecken. Auch ist es möglich, die Ausnehmung in Form von einer oder mehreren Sackbohrungen auszubilden. Als Ausnehmungen werden auch freie Luftbereiche verstanden, die an der Ankerfläche oder der Gegenfläche durch Vorsprünge festgelegt werde. Z.B. können die Ankerfläche und/oder die Gegenfläche einen oder mehrere zentrale oder außermittige Vorsprünge aufweisen, die eine vollflächige Anlage von Ankerfläche und Gegenfläche verhindern.

Bei allen Ausführungsformen ist der an der Ankerfläche und/oder Gegenfläche für den magnetischen Fluss vorhandene Querschnitt infolge der Querschnittreduktion, die von der zumindest einen Ausnehmung verursacht wird, so gering, dass das Material des Ankers und/oder Polstücks an der betreffenden Ankerfläche oder Gegenfläche auf der BH-Kennlinie weiter ausgesteuert wird als im übrigen Anker oder Polstück. Dies wird erreicht, indem der für den magnetischen Fluss zur Verfügung stehende Querschnitt an der Ankerfläche oder Gegenfläche infolge der Anbringung der (außermittigen) Ausnehmung verglichen mit dem gesamten sonstigen Magnetkreis den kleinsten Wert hat.

Die Ausnehmungen können sich auf die ebene Stirnfläche des Ankers beschränken. Es ist aber auch möglich, die Ausnehmungen zumindest über einen Teil der Mantelfläche zu erstrecken. Die Anlagefläche des Ankers kann eben, gewölbt, kegelstumpfförmig oder auch anderweitig ausgebildet sein.

Es ist für manche Anwendungsfälle zweckmäßig, in der Ausnehmung Dämpfungsmaterial vorzusehen. Dieses kann beispielsweise durch einen aus einem Elastomer bestehenden Ring gebildet sein. Das Elastomermaterial kann dazu beitragen, einen Stoß zwischen der Ankerfläche und der Gegenfläche abzufangen. Beispielsweise kann das Dämpfungselement ein O-Ring sein. Dieser kann in einer Ringnut durch Klemmwirkung festgelegt sein. Er ist dort z.B. ohne Zuhilfenahme von Klebstoffen gehalten. Die Gefahr, dass der O-Ring zur Fehlerquelle wird, ist somit sehr gering.

Die vorgestellte erfindungsgemäße Gestaltung des Ankers ist insbesondere vorteilhaft im Zusammenhang mit einer Übererregung des Magnetkreises anwendbar und verhindert hier wirksam ein Klebenbleiben des Ankers.

Weitere Einzelheiten vorteilhafter Ausführungsformen der Erfindung ergeben sich aus der Zeichnung, der Beschreibung oder Ansprüchen. Die Beschreibung beschränkt sich auf wesentliche Details der Erfindung und sonstiger Gegebenheiten. Die Zeichnung offenbart weitere Details. Es zeigen:
Figur 1 ein Gasventil mit Magnetantrieb in schematisierter Schnittdarstellung,
Figur 2 den Magnetantrieb nach Figur 1 in erregtem Zustand,
Figur 2a eine alternative Ausführungsform des Magnetantriebs nach Figur 2 in ausschnittsweiser Darstellung,
Figur 3 eine Alternativvariante eines Magnetantriebs,
Figur 3a eine alternative Ausführungsform des Magnetantriebs nach Figur 3 in ausschnittsweiser Darstellung,
Figur 4 eine weitere Alternativvariante des Magnetantriebs,
Figur 5 den Anker des Magnetantriebs nach Figur 4 in einer Stirnansicht,
Figur 6 eine weitere Ausführungsform des Magnetantriebs,
Figur 7 den Anker des Magnetantriebs nach Figur 6 in einer Stirnansicht in einer anderen Größendarstellung,
Figur 8 eine weitere Ausführungsform eines Magnetantriebs,
Figur 9 den Anker des Magnetantriebs nach Figur 7 in einer Perspektivdarstellung in einer anderen Größendarstellung,
Figur 10 einen Anker einer abgewandelten Ausführungsform des erfindungsgemäßen Magnetantriebs in einer ausschnittsweisen Schnittdarstellung und
Figur 11 die BH-Kennlinie des Materials des Ankers und/oder des Polstücks des Magnetkreises.

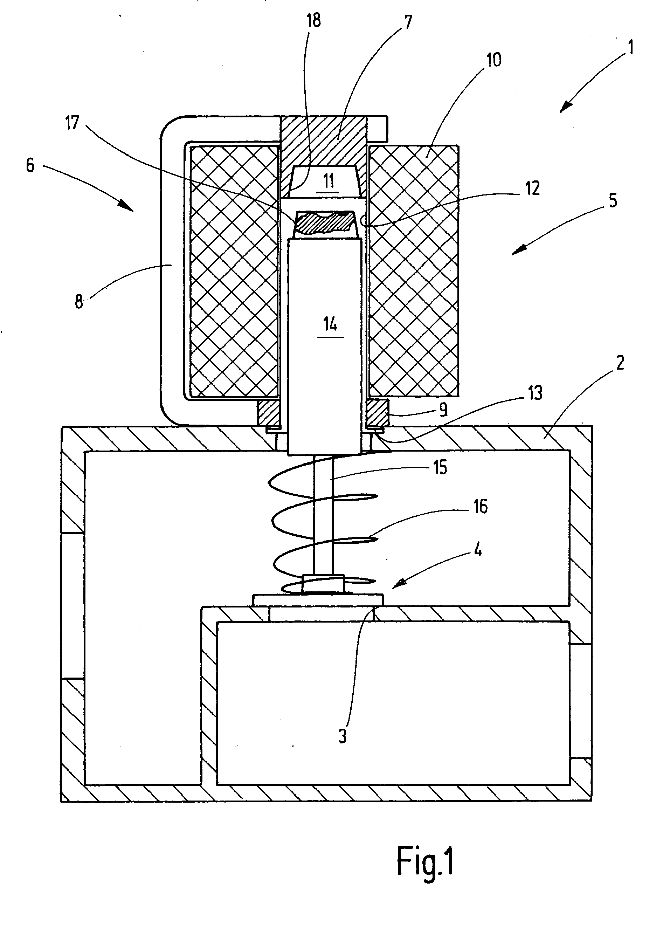

In Figur 1 ist ein Gasventil 1 mit einem Gehäuse 2, einem darin ausgebildeten Ventilsitz 3, einem zugeordneten Ventilverschlussglied 4 und einem Magnetantrieb 5 veranschaulicht, der zum Öffnen des Gasventils 1 dient. Dazu weist der Magnetantrieb 5 einen Magnetkreis 6, bestehend aus einem Polstück 7, einem Joch 8 und gegebenenfalls einem weiteren Polstück 9 auf. Die Polstücke 7, 9 sind konzentrisch zu einer Mittelachse einer Spule 10 angeordnet, die von dem Joch 8 umgriffen wird. Das Joch 8 verbindet die Polstücke 7, 9. In dem Zentrum der Spule 10 ist ein vorzugsweise zylindrischer Kanal oder Aufnahmeraum 11 festgelegt, der an seinem oberen Ende durch das Polstück 7 abgeschlossen und zu dem Ventilverschlussglied 4 hin offen ist. Zur gasdichten Einhausung dieses Innenraums 10 kann zwischen dem Polstück 9 und dem Polstück 7 eine magnetisch nicht leitfähige rohrartige Hülse 12 z.B. eine Edelstahlhülse oder dergleichen vorgesehen sein, die mit dem Polstück 7 verbunden, beispielsweise verschweißt ist, das Polstück 9 durchsetzt und mit einem Flansch 13 an dem Gehäuse 2 abgedichtet ist.

In dem Aufnahmeraum 11 ist ein Anker 14 angeordnet, der beispielsweise zylindrisch ausgebildet ist. Sein oberes Ende kann zur Anpassung an eine kegelstumpfförmige Vertiefung in dem Polstück 7 ebenfalls kegelstumpfförmig ausgebildet sein. Der Anker 14 ist über eine Ventilspindel 15 mit dem Ventilverschlussglied 4 verbunden. Eine sich mit einem Ende an dem Ventilgehäuse 2 und mit ihrem anderen Ende an dem Ventilverschlussglied 4 abstützende Schließfeder 16 spannt das Ventilverschlussglied 4 in Schließstellung vor, wie Figur 1 veranschaulicht.

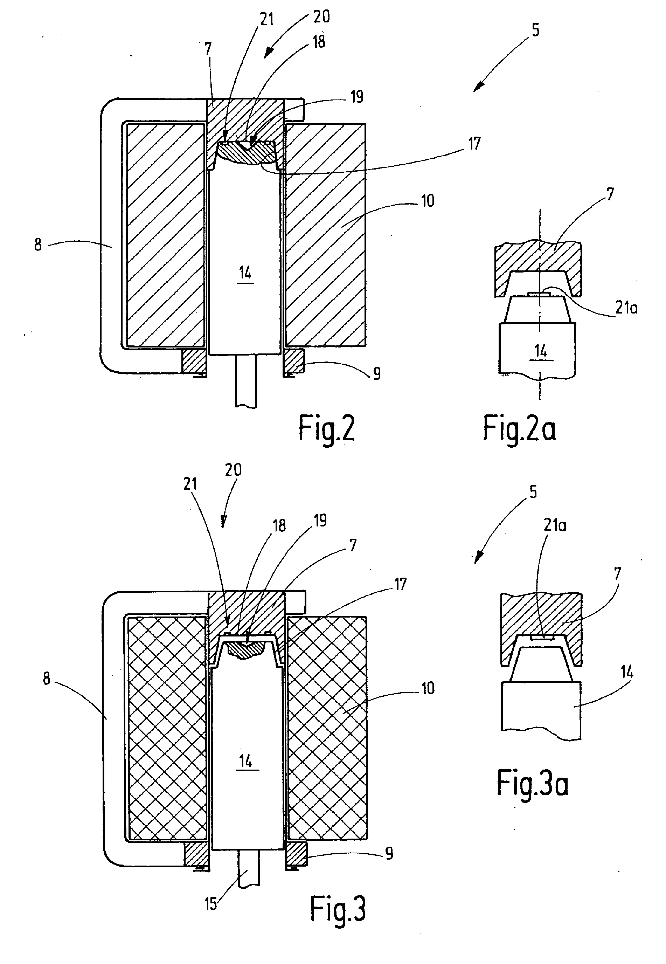

Die Oberfläche des kegelstumpfförmigen Endes des Ankers 14 bildet eine Ankerfläche 17. Eine entsprechend komplementär geformte Fläche des Polstücks 7 bildet eine Gegenfläche 18. Die Ankerfläche 17 kann zusätzlich eine Stufe umfassen, die zu einer beispielsweise zylindrischen Mantelfläche des Ankers 14 führt. Ebenso kann zu der Gegenfläche 18 eine ringförmige ebene Umrandungsfläche an der unteren Stirnseite des Polstücks 7 gehören. Diese Betrachtung ist gerechtfertigt, wenn die genannten Flächenbereiche bei angezogenem Anker 14 an dem Polstück 7 anliegen. Es ist aber auch möglich, dass nur Teile der genannten Flächenbereiche der Ankerfläche 17 und der Gegenfläche aneinander anliegen, beispielsweise der kegelförmige Flächenabschnitt und/oder nur der ebene stirnseitige Flächenabschnitt der Ankerfläche 17 und der zugeordneten Gegenfläche 18. Somit werden unabhängig von der jeweiligen geometrischen Ausdehnung von Ankerfläche 17 und Gegenfläche 18 jeweils diejenigen Flächenpartien als die eigentlichen "Anlageflächen" und "Gegenflächen" angesehen, die bei angezogenem Anker miteinander in Eingriff bzw. Anlage kommen können. Figur 2 veranschaulicht dies für ein Ausführungsbeispiel, bei dem die Ankerfläche 17 und die Gegenfläche 18 jeweils kegelstumpfförmig ausgebildet sind.

Wie aus den Figuren 1 und 2 weiter hervorgeht, weist der Anker 14 stirnseitig eine kegelförmige Zentrierbohrung 19 auf, die zentrisch angeordnet ist. Zusätzlich ist außermittig zumindest eine weitere Ausnehmung 20 vorgesehen, die im vorliegenden Ausführungsbeispiel die Form einer Ringnut 21 hat. Diese ist in einem stirnseitigen Abschnitt der Ankerfläche 17 vorgesehen und umrundet die Zentrierbohrung 19 nahe des Rands der Stirnfläche. Dieser Rand ist der Übergang zwischen der ebenen Stirnfläche und der äußeren Kegel- oder Konusfläche. Anstelle der Ringnut 21 oder sonstiger Ausnehmngen können an dem Anker 14 und/oder seinem Gegenstück (Polstück 7) auch ein oder mehrere Vorsprünge, z.B. Rippen oder Noppen oder Absätze vorgesehen sein, wie die Figuren 2a und 3a zeigen.

Der insoweit beschriebene Magnetantrieb 1 arbeitet wie folgt:

Im Ruhezustand weist das Gasventil 1 die in Figur 1 veranschaulichte Position auf. Der Anker 14 ist von dem Polstück 7 nicht angezogen. Es besteht ein großer Luftspalt zwischen der Ankerfläche 17 und der Gegenfläche 18.

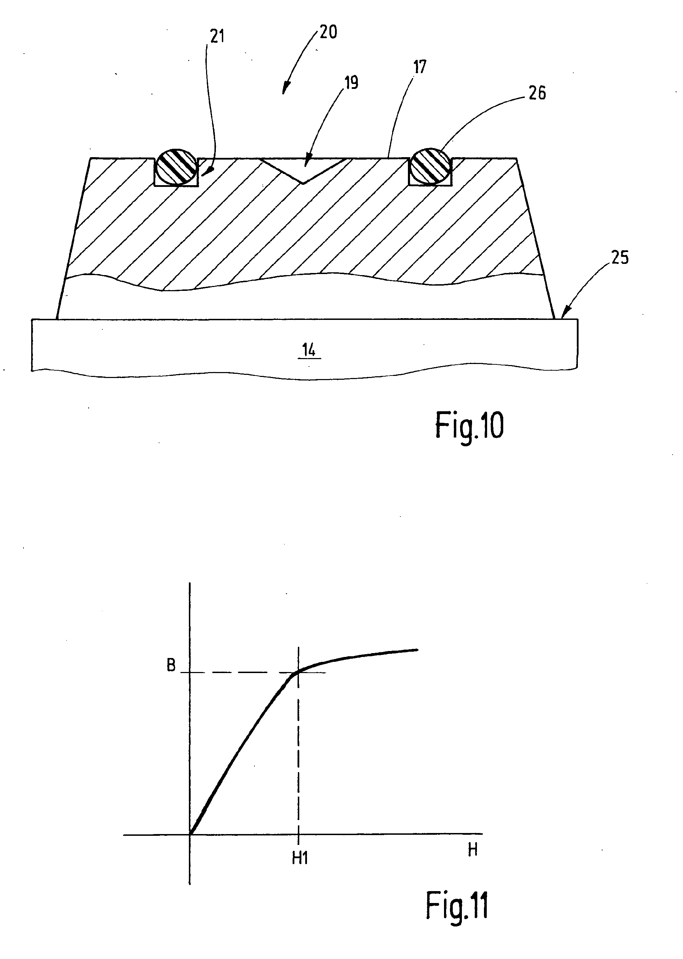

Wird die Spule 10 bestromt, entsteht ein Magnetfluss, der den Luftspalt zwischen der Ankerfläche 17 und der Gegenfläche 18 durchsetzt und den Anker 14 in Richtung des Polstücks 7 bewegt. Dadurch nimmt die Luftspaltweite und somit der magnetische Widerstand des Luftspalts ab. Der magnetische Fluss nimmt dadurch zu. Dies entspricht einem Ansteigen des Arbeitspunkts auf der BH-Kennlinie nach Figur 10.

Sobald der Luftspalt nur noch eine geringe Größe hat, erreicht der Magnetfluss um die Ringnut 21 herum eine Größe, die zumindest das an der Oberfläche in unmittelbarer Nachbarschaft der Ringnut 21 liegende Material in die Sättigung gelangen lässt. Die magnetische Feldstärke H überschreitet den in Figur 1 eingetragenen Wert H1, bei dem der Sättigungsbereich der Kennlinie beginnt. Während unterhalb von H1 die magnetische Induktion B und die magnetische Feldstärke H ungefähr in linearem Zusammenhang zueinander stehen und die Permeabilitätskonstante µᵣ einen großen Wert aufweist, nimmt die magnetische Induktion B im Sättigungsbereich, d.h. bei Überschreiten von H1, nur noch wenig zu und die Permeabilitätskonstante µᵣ hat hier einen kleineren Wert. Besonders ausgeprägt ist dieser Effekt bei Verwendung magnetischen Materials mit einer BH-Kennlinie, die bei H1 einen Knick aufweist. Die Sättigung der Stirn- oder Ankerfläche 17 des Ankers 14 oder der Gegenfläche 18 des Polstücks 7 wird erreicht, weil der zur Magnetflussleitung zur Verfügung stehende Materialquerschnitt hier den geringsten Wert im gesamten Magnetkreis 6 hat.

Durch die Sättigung von stirnseitigen Materialbereichen des Ankers 14 wird der wirksame Luftspalt und somit der magnetische Widerstand vergrößert. Der Anker 14 erfährt deshalb gegen Ende seines Bewegungshubs kurz vor dem Auftreffen der Ankerfläche 17 auf die Gegenfläche 18 nicht wie gewohnt eine starke Beschleunigung. Der übliche Kraftanstieg am Ende des Hubs des Ankers 14 fällt weg. Die Ankerfläche 17 trifft deshalb mit verminderter Wucht auf die Gegenfläche 18 auf. Eine durch Stoß verursachte Magnetisierung des Materials des Ankers 14 und/oder des Polstücks 7 wird dadurch vermieden. Auch wird eine mechanische Beschädigung des Ankers 14 oder des Polstücks 7 auch bei sehr häufigen Schaltvorgängen vermieden.

Wird die Spule 10 abgeschaltet, kann sich der Anker 14 sehr schnell von dem Polstück 7 lösen. Die Schließfeder 16 bewegt den Anker 14 von dem Polstück 7 weg. Gemessene Abfallzeiten liegen bei etwa 0,3 Sekunden. Schaltspiele von mehr als einer Million Schaltvorgängen wurden getestet und bestätigen die dauerhafte Funktion des Magnetantriebs 5 und die geringe Abfallzeit auch ohne Remanenzscheibe. Die Remanenzscheibe wird durch sättigbare Stirnbereiche des Ankers 14 ersetzt.

Figur 3 veranschaulicht eine abgewandelte Ausführungsform. Soweit die vorige Beschreibung gilt, wird unter Zugrundelegung gleicher Bezugszeichen auf dieselbe verwiesen. Im Unterschied zu der vorstehenden Beschreibung ist die Ausnehmung 20 in Form einer Ringnut 21 nicht in der Ankerfläche 17 sondern in der Gegenfläche 18 ausgebildet. Die Funktion entspricht jedoch ansonsten der des vorstehend beschriebenen Ausführungsbeispiels.

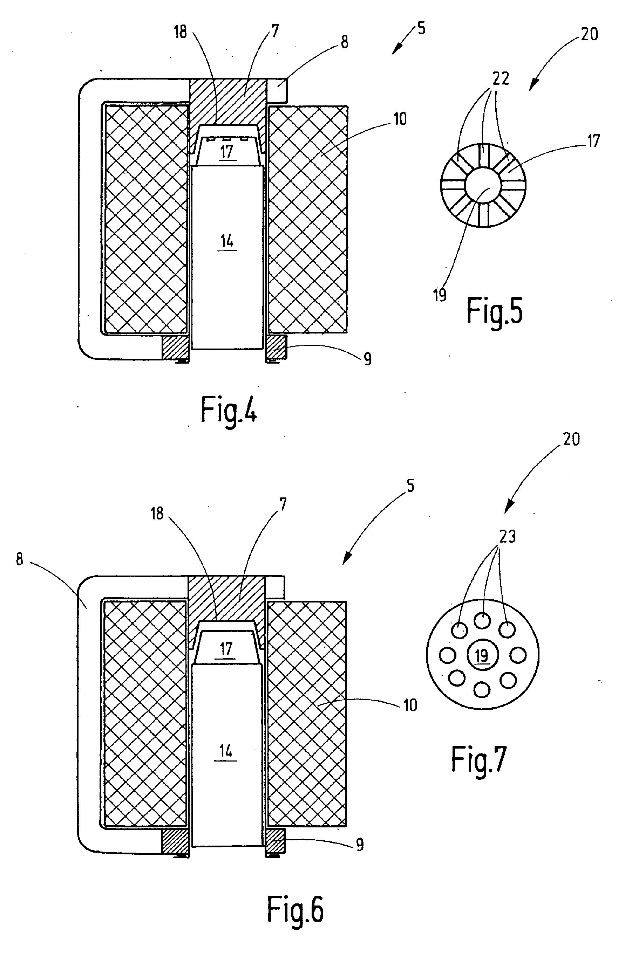

Die Ausnehmung 20 muss nicht zwangsläufig als Ringnut ausgebildet sein. Wie Figur 4 und 5 veranschaulichen, können zu der Ausnehmung 20 auch ein oder mehrere Radialnuten 22 gehören, die, wie in Figur 4 und 5 dargestellt, in der Ankerfläche 17 oder alternativ auch (nicht dargestellt) in dem Polstück 7 vorgesehen sind. Ansonsten gilt die vorstehende Beschreibung entsprechend.

Wie die Figuren 6 und 7 zeigen, kann die Ausnehmung auch die Form von Sackbohrungen 23 aufweisen, die in der Ankerfläche 17, beispielsweise in deren ebenen Stirnbereich vorgesehen sind. Wie die Ringnut und die Radialnuten 22 sind die Sackbohrungen 23 wiederum außermittig angeordnet. Z.B. liegen sie auf einer Kreislinie, die die Zentrierbohrung 19 konzentrisch umgibt.

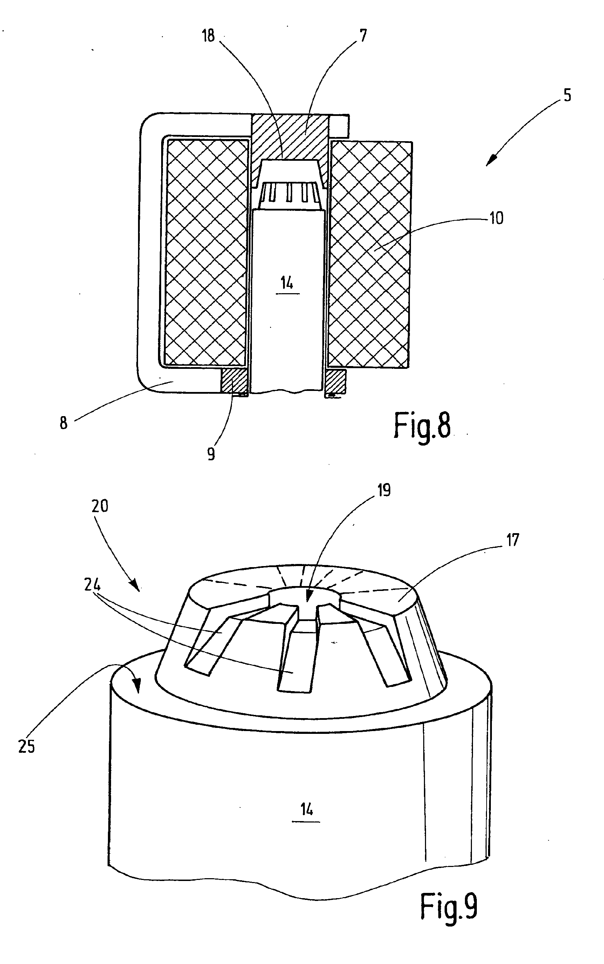

Eine weitere Abwandlung veranschaulichen Figur 8 und 9. Die Ankerfläche 17 ist hier nicht nur in ihrem ebenen Stirnbereich sondern zusätzlich in ihrem konischen Umfangsbereich mit radial orientierten Nuten 24 versehen. Diese erstrecken sich strahlenförmig von der Zentrierbohrung 19 weg und dienen dazu, nicht nur ein Kleben zwischen den ebenen Abschnitten der Ankerfläche 17 und der Gegenfläche 18 sondern auch ein Kleben zwischen den konischen Flächenabschnitten zu verhindern. Bedarfsweise können sich die Nuten 24 bis in den Bereich der Schulter 25 erstrecken (nicht dargestellt), die zwischen der zylindrischen Außenumfangsfläche des Ankers 14 und dem konischen Flächenabschnitt der Ankerfläche 17 ausgebildet ist. Auch die Ringfläche 25 kann mit einer oder mehreren Ausnehmungen oder Vorsprüngen versehen sein, um einen vollflächigen Kontakt mit der entsprechenden Gegenfläche des Magnetkreises zu vermeiden.

Die Ausnehmungen 20 der verschiedenen vorgestellten Ausführungsformen können offen bleiben. Sie können jedoch auch ganz oder teilweise mit dämpfendem Material ausgefüllt sein. Beispielsweise kann die Ringnut 21 des Ankers 14 nach Figur 1 und 2, wie Figur 10 zeigt, mit einem O-Ring 26 bestehend aus einem Elastomermaterial versehen sein. Dieser O-Ring 26 kann zwischen den Flanken der Ringnut 21 klemmen und teilweise aus der Ringnut 21 heraus schauen. Er kann somit das Auftreffen der Ankerfläche 17 auf die Gegenfläche 18 abdämpfen.

Weitere Abwandlungen sind möglich. Beispielsweise können die genannten Ausnehmungen 20 auch als Zwischenräume zwischen Vorsprüngen, wie beispielsweise leistenartigen oder noppenartigen Vorsprüngen definiert werden. Es ist auch möglich, den Anker 14 mit einem zentralen Vorsprung zu versehen, der von einem zurückgesetzten Ringbereich umgeben ist, der einen Luftspalt zwischen der Ankerfläche 17 und der Gegenfläche 18 definiert, wenn der zumindest eine Vorsprung des Ankers 14 oder des Polstücks 7 mit der jeweils gegenüber liegenden Fläche in Anlage steht.

Durch Anbringung einer oder mehrerer Ausnehmungen, Einstiche oder dergleichen auf der Anlagefläche des Ankers oder der Polfläche eines Polstücks kann die Haltekraft des Magnetantriebs so weit verringert werden, dass trotz fehlender Remanenzscheibe ein Schließen innerhalb einer Sekunde sicher gestellt wird. Der Verzicht auf die Remanenzscheibe führt zu einer Erhöhung der Betriebssicherheit und einer Verminderung der Teilezahl. Der Magnetantrieb 5 kann mit Powerschaltungen betrieben werden, die die Spule 10 anfänglich mit einem besonders hohen Strom beaufschlagen, der zu einer Übererregung führt. Der Magnetantrieb 5 eignet sich auch für die Ansteuerung ohne Übererregung.

### Bezugszeichen

- 1: Gasventil
- 2: Gehäuse
- 3: Ventilsitz
- 4: Ventilverschlussglied
- 5: Magnetantrieb
- 6: Magnetkreis
- 7: Polstück
- 8: Joch
- 9: Polstück
- 10: Spule
- 11: Aufnahmeraum
- 12: Hülse
- 13: Flansch
- 14: Anker
- 15: Ventilspindel
- 16: Schließfeder
- 17: Ankerfläche
- 18: Gegenfläche
- 19: Zentrierbohrung
- 20: Ausnehmung
- 21: Ringnut
- 22: Radialnuten
- 23: Sackbohrung
- 24: Nute
- 25: Schulter

## Patentansprüche

1. Ventilantrieb, insbesondere für Gasventile (1),
mit einem Magnetkreis (6), der von zumindest einer Spule (10) magnetisch erregbar ist, die in dem Magnetkreis (6) einen magnetischen Fluss hervorruft,
mit zumindest einem beweglich gelagerten Anker (14), der als Teil des Magnetkreises (6) angeordnet ist, um zumindest von einem Teile des magnetischen Flusses des Magnetkreises (6) durchströmt zu werden,
wobei der Anker (14) eine Ankerfläche (17) aufweist, die mit einer Gegenfläche (18) des Magnetkreises (6) einen Luftspalt einschließt und in Anlage überführbar ist,
wobei
die Ankerfläche (17) und/oder die Gegenfläche (18) mit zumindest einer außermittigen Ausnehmung (20) versehen ist.

2. Ventilantrieb nach Anspruch 1, **dadurch gekennzeichnet, dass** die Ausnehmung (20) eine Nut ist.

3. Ventilantrieb nach Anspruch 2, **dadurch gekennzeichnet, dass** die Nut eine Ringnut (21) oder eine Radialnut (22) ist.

4. Ventilantrieb nach Anspruch 2, **dadurch gekennzeichnet, dass** die Ausnehmung (20) eine Sackbohrung (23) ist.

5. Ventilantrieb nach Anspruch 1, **dadurch gekennzeichnet, dass** die Ausnehmung eine Größe aufweist, die ausreichend ist, um das an die Ankerfläche (17) und/oder die Gegenfläche (18) anschließende Material des Ankers (14) und/oder des Magnetkreises (6) wenigstens teilweise in die Sättigung zu bringen, wenn die Ankerfläche (17) und die Gegenfläche (18) aneinander anliegen und die Spule (10) erregt ist.

6. Ventilantrieb nach Anspruch 1, **dadurch gekennzeichnet, dass** in der Ausnehmung ein Dämpfungsmaterial angeordnet ist.

7. Ventilantrieb nach Anspruch 2, **dadurch gekennzeichnet, dass** das Dämpfungsmaterial aus der Ausnehmung (20) herausragt.

8. Ventilantrieb nach Anspruch 2, **dadurch gekennzeichnet, dass** das Dämpfungsmaterial ein Elastomer-Ring (25) ist.

9. Ventilantrieb nach Anspruch 2, **dadurch gekennzeichnet, dass** der Anker (14) linear beweglich gelagert ist.

10. Ventilantrieb nach Anspruch 2, **dadurch gekennzeichnet, dass** der Anker (14) durch eine Feder (16) von der Gegenfläche (18) weg vorgespannt ist.
